# EUROPEAN PATENT APPLICATION

(11) **EP 2 469 736 A2**
(43) Date of publication of application: **27.06.2012**
(21) Application number: 10810159.3
(22) Date of filing: 18.08.2010
(51) Int. Cl.: H04B 7/26, H04W 72/02, H04W 24/10

(54) **METHOD AND APPARATUS FOR TRANSMITTING AN UPLINK BROADBAND MEASUREMENT SIGNAL IN A WIRELESS COMMUNICATION SYSTEM, AND METHOD AND APPARATUS FOR ESTIMATING A DOWNLINK CHANNEL USING SAME**

(30) Priority: 19.08.2009 KR 20090076937
(71) Applicant: Pantech Co., Ltd., Seoul 121-270 (KR)
(72) Inventor: PARK, Kyoungmin, Seoul, 121-270 (KR); SUH, Sungjin, Seoul 121-270 (KR); YOON, Sungjun, Seoul 121-270 (KR)
(74) Representative: Herzog, Markus
(86) International application number: PCT/KR2010/005461
(87) International publication number: WO 2011/021851

(57) **Abstract**

The present specification relates to a wireless communication system, and more particularly, to a method and apparatus for transmitting an uplink broadband measurement signal in a wireless communication system, and to a downlink channel estimation technique using the same.

## Description

### Technical Field

The present invention relates to a wireless communication system, and more particularly, to a method and an apparatus for transmitting an uplink broadband measurement signal in a wireless communication system, and a method and an apparatus for estimating a downlink channel using the same.

### Background Art

According to the development of a communication system, consumers including companies and individuals have used very various wireless user equipments.

Accordingly, communication service providers have continuously made attempts to expand an existing communication service market through creating a new communication service market for wireless user equipments and providing reliable and cost-effective services.

An estimation of a state of a downlink channel in a downlink environment in which a base station or the like transmits data to user equipment in a wireless communication system is basically demanded.

In the meantime, conventional systems use a codebook in order to transfer information on a downlink channel through a small feedback overhead. Specifically, the conventional systems select several numbers of representative channel forms or select a precoder appropriate to a selected channel form and create a codeword expressing each selected channel form or the precoder to be used and design a codebook including the codewords. User equipment estimates a downlink channel, searches the codebook, extracts the most appropriate codeword, and then transmits the extracted codeword together with a control signal or an information signal transmitted through an uplink.

In such a conventional technique, since there is only one base station to which the user equipment can transmit the information signal or the control signal, not only is the conventional technique not appropriate to a Coordinated Multi-Point (CoMP) transmission/reception system in which user equipment communicates using multiple base stations, but also a large number of bits must be used for the expression of channel information so that the user equipment transfers accurate information on a downlink channel to a base station, so that a large feedback overhead is demanded. In order to reduce a feedback overhead, it is necessary to control the transmission such that the user equipment transfers the information on the downlink channel with the smallest number of times possible, which, however, has a disadvantage in that a separate transmission control overhead is demanded.

Further, a method capable of expressing channel information while using fewer resources has been demanded.

Especially, in a communication protocol of a recently researched Long Term Evolution-Advanced (LTE-A), in order to use the MU-MIMO (Multi User-Multiple Input Multiple Output) technique of simultaneously transferring information to various users by using the MIMO in a downlink and efficiently control the Multiple Access Interference (MAI) by multiple accesses, a base station demands accurate information on a channel through which a signal transmitted to each user equipment is propagated.

### Disclosure

### Technical Problem

Accordingly, the present invention has been made to solve the above-mentioned problems occurring in the prior art, and the present invention provides a method and an apparatus for transmitting a Sounding Reference Signal (SRS) in a wireless communication system, in which user equipment transmits an uplink broadband measurement signal to two or more base stations without interference and a downlink channel is estimated using the uplink broadband measurement signal.

### Technical solution

In accordance with an aspect of the present invention, there is provided a method of transmitting an uplink broadband measurement signal to two or more base stations by user equipment, the method including: a first stage of generating the uplink broadband measurement signal; a second stage of allocating resources to transmit the uplink broadband measurement signal to a time-frequency domain such that the resources are not overlapped for each base station; and a third stage of transmitting the allocated uplink broadband measurement signal.

In accordance with another aspect of the present invention, there is provided an apparatus for transmitting an uplink broadband measurement signal to two or more base stations, the apparatus generating the uplink broadband measurement signal, allocating resources to transmit the generated uplink broadband measurement signal to a time-frequency domain such that the resources are not overlapped for each base station, and transmitting the uplink broadband measurement signal to a corresponding base station.

In accordance with another aspect of the present invention, there is provided a method of estimating a downlink channel in two or more base stations, the method including: by each of the two or more base stations, receiving an uplink broadband measurement signal generated in user equipment, allocated to a time-frequency domain in which a downlink channel can be estimated without an overlap of the uplink broadband measurement signal for another base station, and transmitted; and estimating the downlink channel from the received uplink broadband measurement signal.

In accordance with another aspect of the present invention, there is provided a technique for allocating resources to transmit an uplink broadband measurement signal to a time domain, in which a downlink channel can be estimated from the uplink broadband measurement signal for each base station, when the resources to transmit the uplink broadband measurement signal are allocated to a time-frequency domain such that the resources are not overlapped for each base station.

In accordance with another aspect of the present invention, there is provided a base station apparatus for estimating a downlink channel by using an uplink broadband measurement signal received from user equipment, the base station apparatus receiving the uplink broadband measurement signal generated in the user equipment, allocated to a time-frequency domain in which a downlink channel can be estimated without an overlap of the uplink broadband measurement signal for another base station, and transmitted, and estimating the downlink channel from the received uplink broadband measurement signal.

### Brief Description of the Drawings

The above and other aspects, features and advantages of the present invention will be more apparent from the following detailed description taken in conjunction with the accompanying drawings, in which:
FIG. 1 is a block diagram illustrating a wireless communication system to which an embodiment of the present invention is applied;
FIG. 2 is a diagram illustrating an SRS resource allocation method for each base station according to a first embodiment of the present invention;
FIG. 3 is a diagram illustrating an SRS resource reallocation for each user equipment within each cell according to a second embodiment of the present invention;
FIG. 4 is a diagram illustrating an SRS resource allocation method for each base station according to a third embodiment of the present invention;
FIG. 5 is a diagram illustrating an example of an SRS resource allocation for each user equipment within each cell according to a fourth embodiment of the present invention; and
FIG. 6 is a diagram illustrating an example of an SRS resource allocation for each user equipment within each cell according to a fifth embodiment of the present invention.

### Best Mode

### Mode for Invention

Hereinafter, exemplary embodiments of the present invention will be described with reference to the accompanying drawings. The construction illustrated in the exemplary embodiments and drawings is merely the preferred embodiments of the present invention, and does not speak for the technical spirit of the present invention. In the following description, the same elements will be designated by the same reference numerals although they are shown in different drawings. Further, in the following description, detailed explanation of known related functions and constitutions may be omitted so as to avoid unnecessarily obscuring the subject manner of the present invention.

Further, in describing the constructional elements of the present invention, the terms of a first, a second, A, B, (a), (b), or the like, can be used. Such a term is only for discriminating the constructional element from another constructional element, and does not limit the essential feature, order, or sequence of the constructional element, or the like. If one constructional element is "coupled to", "assembled with", or "connected to" another constructional element, one constructional element is directly coupled to or connected to another constructional element, but it can be understood as another different constructional element can be "coupled", "assembled", or "connected" between each constructional element.

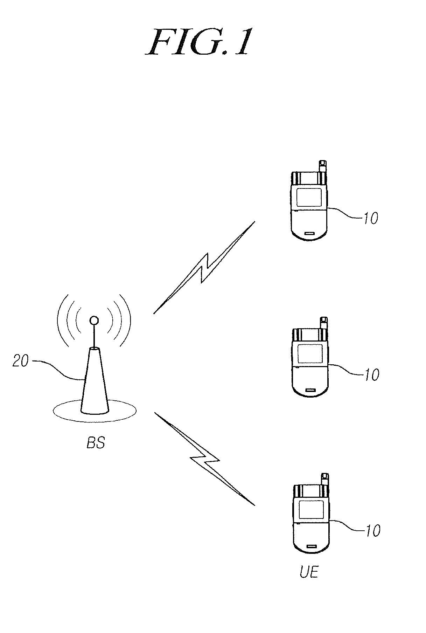

FIG. 1 is a block diagram illustrating a wireless communication system to which an embodiment of the present invention may be applied.

A wireless communication system is broadly disposed in order to provide various communication services, such as voice and packet data.

Referring to FIG. 1, the wireless communication system includes user equipment (UE) 10 and a Base Station (BS) 10. The UE 10 and the BS 20 use a method of transmitting an uplink broadband measurement signal and a method of estimating a downlink channel using the uplink broadband measurement signal.

The UE 10 used in herein has a comprehensive concept meaning a user equipment in a wireless communication and shall be interpreted as a concept including not only user equipment in Wideband Code Division Multiple Access (WCDMA), LTE, and High Speed Packet Access (HSPA), and but also a Mobile Station (MS), a User equipment (UT), a Subscriber Station (SS), and a wireless device in the Global System for Mobile communication (GSM).

The BS 20 or a cell generally refers to a fixed station communicating with the UE 10, and may be called another term, such as a Node-B, an evolved Node B (eNB), a Base Transceiver System (BTS), an access point, and a relay node.

That is, the BS 20 or the cell used herein shall be interpreted to have a comprehensive meaning representing a partial region covered by a Base Station Controller (BSC), a NodeB in the WCDMA, etc., and has a meaning covering all of various coverage area, such as a communication range of a megacel, a macrocell, a microcell, a picocell, a femtocell, and a relay node.

The UE 10 and the BS 20 used herein have a comprehensive meaning representing two subjects for transmission/reception used for implementation of a technique or a technical spirit of the present invention, and are not limited by a specifically designated term or word.

There is no limit of the multi access technique applied to the wireless communication system. The wireless communication system may use various multiple access techniques including CDMA (Code Division Multiple Access), TDMA (Time Division Multiple Access), FDMA (Frequency Division Multiple Access), OFDMA (Orthogonal Frequency Division Multiple Access), OFDM-FDMA, OFDM-TDMA, and OFDM-CDMA.

The uplink transmission and the downlink transmission may use a Time Division Duplex (TDD) technique of transmitting a signal by using different times or a Frequency Division Duplex (FDD) technique of transmitting a signal by using different frequencies.

An embodiment of the present invention may be applied to a resource allocation in an asynchronous wireless communication field evolved to the LTE and the LTE-advanced from the GSM, WCDMA, and HSPA, and a synchronous wireless communication field evolved to the CDMA, CDMA-200, and UMB. The present invention shall not be interpreted as being limited to a specific wireless communication field, and shall be interpreted to include all technical fields to which the spirit of the present invention can be applied.

The UE in the wireless communication system transmits an uplink broadband measurement signal, which is a sort of reference signal, to a single BS in order to transmit uplink channel information to the BS.

For example, an uplink broadband measurement signal is a Sounding Reference Signal (SRS) used in the LTE and the LTE-Advanced, and has a function, such as a pilot channel for an uplink channel.

Hereinafter, the present invention will be described based on the SRS which is an example of an uplink broadband measurement signal, but it shall not be limited to the SRS and the SRS shall be interpreted as the uplink broadband measurement signal in a broad meaning.

The SRS may transfer uplink channel information for all bands including only a band to be used by each user, to the BS, but also a band which a user probably uses. That is, the UE should transmit the SRS to all sub-carrier bands.

In the meantime, when an interval and a transmission time interval between the uplink band and the downlink band is not large, and a uplink channel and a downlink channel share some properties, so that the BS may estimate the downlink channel by using the received SRS. That is, the BS may estimate the downlink channel through calculating a uplink channel matrix by using the SRS transmitted from the UE and then taking a transpose matrix for the calculated uplink channel matrix, but the downlink channel estimation is not limited thereto.

However, the uplink channel estimation using the SRS is used for the purpose of a scheduling, so that if it has an accuracy in a degree by which a size difference of a propagation gain of each band can be discriminated, the accuracy is sufficient for the uplink channel estimation, and there are many cases in which if a transmission period is long, it is okay for the uplink channel estimation. However, the downlink channel estimation using the SRS is used for the purpose of designing a transmission technique, such as a precoding, so that it is necessary to rapidly track a change of a time of the downlink channel.

In the meantime, when multiple BSs attempt to provide a single user with a Coordinated Multi-Point (CoMP) transmission/reception service in a CoMP transmission/reception system, the multiple BSs allocate the same frequency resources at the same time and provide the CoMP transmission/reception service.

When the BSs transmit and receive coordinated data to/from the UE in the CoMP transmission/reception system, the UE is allocated the same frequency resources at the same time to transmit/receive the coordinated data. The multiple BSs selected as the coordinated BSs use the same frequency resources at the same time to transmit/receive data to/from the single user. Accordingly, the BSs selected as the coordinated BSs must be BSs having a good channel performance for any used frequency band for a corresponding user.

The user interprets reference signals transmitted from each BS, recognizes each BS and a channel condition of each antenna of each BS, and directly or indirectly feeds back recognized information to the corresponding BS.

According to the introduction of the CoMP transmission/reception system, there occurs a necessity of transmitting the same reference signal to adjacent cells, i.e. several BSs, by a single user at the same time, but according to the prior art, the UE can transmit information to only one BS at the same time. That is, the number of BSs demanding the downlink channel information is multiple, but the number of BSs to which the UE can transmit information signal or control signal is one, so that when the UE transmits the downlink channel information together with the control signal or information signal, the UE cannot transfer the downlink channel information to several BSs at the same time. Accordingly, in order to solve such a problem, a technique of transmitting the downlink channel information by using a signal other than the control signal or the information signal is necessary.

Further, it is not necessary to consider interference between adjacent cells for transmission of an uplink reference signal according to the prior art. However, a single user transmits the same reference signal to the multiple BSs according to the introduction of the CoMP transmission/reception system, so that a case in which interference between adjacent cells is probably be generated is happened.

In order to use the uplink reference signal in such an environment, it is necessary to prevent the generation of the interference of signals of the UE transmitting the SRS to the several BSs at the same time through the time division or the frequency division.

Accordingly, the present invention discloses a technique of allocating SRS resources, which may prevent the generation of interference through allocating an SRS generated when a UE transmits the SRS to at least two BSs to a time-frequency domain so that the SRS of each BS is not overlapped.

Further, when the UE allocates the SRS to the time-frequency domain such that the SRS of each BS is not overlapped, the UE allocates the SRS to a time domain in which the BS can estimate a downlink channel from the SRS, so that the BS may directly estimate the downlink channel from the SRS without receiving the downlink channel information from the UE.

Further, when there are multiple UEs belonging to each BS, a region for transmission of the SRS resources allocated to each BS may be reallocated to the time-frequency domain such that the SRS is not overlapped in each UE, and especially it is preferable to reallocate the region for SRS transmission to a time domain in which the downlink channel can be estimated.

Here, the "time domain" refers to an SRS transmission period enough for each BS to estimate the downlink channel between one or more UEs and the BSs from an SRS received from a specific UE, and is preferably a time slot based on each symbol, but it is not limited thereto.

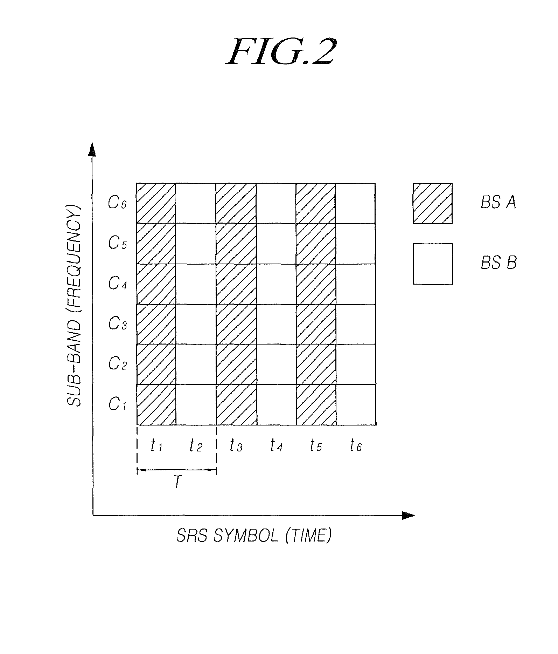

In order to satisfy such a condition, in a first embodiment of the present invention described in FIG. 2, a UE allocates an SRS resources for transmission of the SRS to be transmitted to multiple BSs, in which the UE transmits the SRS to a different BS (or cell) in a different symbol or a different time.

That is, as illustrated in FIG. 2, the UE allocates the SRS transmission regions of each BS while spacing one time slot, such as the UE transmits the SRS to BS A (or Cell A) in all bands of a detailed time interval (time slot) t₁, the SRS to BS B (or Cell B) in all bands of for a detailed time interval t₂, and transmits the SRS to BS A (or cell A) again for a detailed time interval t₃. That is, the SRS transmission resources corresponding to each cell are allocated in different time domains.

According to the aforementioned allocation of the SRS transmission resources, the SRS may be transmitted to two or more BSs from a single UE without interference while a condition that the SRS to each BS should be transmitted through all bands is satisfied.

A case in which the single UE transmits the SRS to the two or more BSs is exemplified in the aforementioned first embodiment. However, when there are multiple UEs, as described in a second embodiment, the SRS resources allocated to each BS must be reallocated for each UE without interference again.

According to the second embodiment, when the SRS transmission resources divided based on a time domain allocated to each BS is reallocated again for each UE, the SRS transmission resources are reallocated such that the BS may receive the SRS in all bands for a finite time interval T without an overlap of the SRS transmission resources for different UEs.

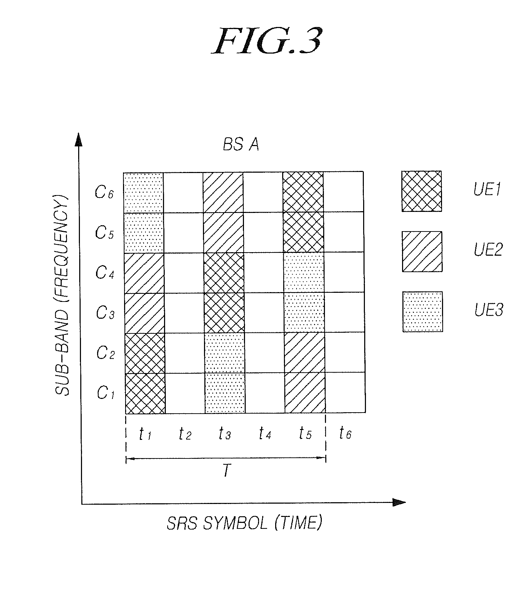

That is, in the second embodiment, when the SRS transmission resources divided in the different time domains and allocated to each BS are reallocated for each UE, as illustrated in FIG. 3, after the SRS resources are divided in different time domains for each BS, BS A 1) allocates UE 1 to sub-bands c₁ and c₂, UE 2 to sub-bands c₃ and c₄, and UE 3 to sub-bands c₅ and c₆ of detailed time band t₁, 2) allocates UE 3 to sub-bands c₁ and c₂, UE 1 to sub-bands c₃ and c₄, and UE 2 to sub-bands c₅ and c₆ of a next allocated detailed time band t₃, and 3) allocates UE 2 to sub-bands c₁ and c₂, UE 3 to sub-bands c₃ and c₄, and UE 1 to sub-bands c₅ and c₆ of the next detailed time band t₅.

In the first and second embodiments, the UE allocates the SRS resources to be transmitted for the SRS transmission to multiple BSs by using the time division technique of transmitting the SRS to a different BS (or cell) in a different symbol or a different time, i.e. the technique of dividing only the time domains for each BS and using the resources in all bands, but the allocation of the SRS resources is not limited thereto. As illustrated in the third to fifth embodiments, the allocation of the SRS resources may employ a semi-random technique of allocating the SRS resources for every BS without an overlap of the SRS resources in a time-frequency domain according to a regular rule.

According to the third embodiment of the present invention, a semi-random allocation method is described in which, in the allocation of an SRS to be transmitted to multiple BSs by a UE in a time-frequency domain through all bands including multiple sub-bands during a finite time interval T including multiple detailed time bands (time slot t), the UE allocates the SRS resources for each BS or each cell for each detailed time band and sub-band under a regular rule such that the BS or each cell may receive the SRS in all bands during the finite time interval T without an overlap of the SRS transmission resources of another BS.

Here, the finite time interval T means all periods in which each of the multiple BSs receiving the SRS from the UE may receive/transmit the SRS in all bands and may be variably set according to the number of BSs and the number of UEs belonging to the BS, and the detailed time band or the time slot may have a size of one SRS symbol, but it is not limited thereto.

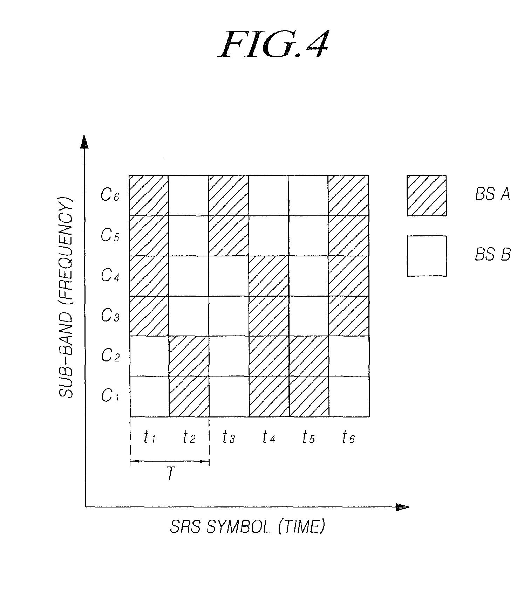

That is, as illustrated in FIG. 4, differently from the first embodiment of FIG. 1 in which the UE transmits the SRS to one cell over all bands for each of the detailed time band t₁, some sub-bands are allocated to BS A and BS B (shadow regions are regions allocated to BS A and non-shadow regions are regions allocated to BS B) such that the sub-band for each of the detailed time bands t₁ to t₆ is not overlapped, and when the entire finite time interval T is considered, each cell receives the SRS in all sub-bands (bands).

In the third embodiment, it is preferable to transmit the SRS in all time slots or detailed time bands for each BS according to a regular rule. That is, when the UE transmits the SRS to two BSs, the SRS resources is allocated as illustrated in FIG. 4. However, when the UE transmits the SRS to three BSs, it is set to be T=3t and the UE allocates the SRS resources such that each of the three BSs in all time slots receives the SRS in at least one sub-band.

When the UE transmits the SRS resources and transmits the SRS as described above, each cell receives the SRS in all sub-bands (bands) without interference considering the entire finite time intervals T.

Especially, the time division technique of the first embodiment meets a condition that the SRS should be transmitted in all bands in a unit of a BS, but the BS does not receive the SRS for every finite time interval or every time slot T. Accordingly, as the number of BSs or points, which should simultaneously transmit the signal, increases, the space of the time slots is further increased, so that the accuracy of the downlink channel estimation is further deteriorated.

However, when the SRS resources are allocated in the semi-random technique illustrated in the third embodiment, i.e. the technique in which each of the multiple BSs receives the SRS in at least one sub-band in all time slots, the BS receives the SRS for every time slot, so that it is advantageously possible to frequently and accurately estimate the downlink channel.

In the third embodiment, the case, in which one UE transmits the SRS to the two BSs has been described. When multiple UEs belonging to each BS, as illustrated in the fourth and fifth embodiments, the SRS resources allocated to each BS may be reallocated for each UE such that the downlink channel may be estimated.

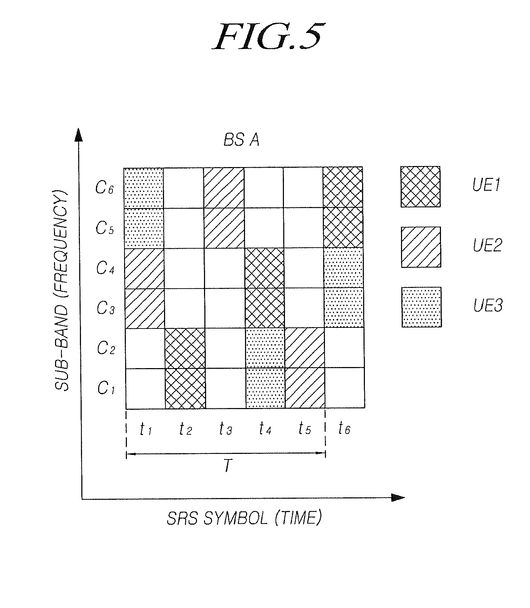

In the fourth embodiment illustrated in FIG. 5, in the reallocation of the SRS resources, after the UE allocates the SRS resources to each BS according to the semi-random technique as described in the third embodiment (FIG. 4), BS A reallocates the SRS resources in a sequence, such as 1) sub-bands c₃ and c₄ among sub-bands c₃ to c₆ of detailed time band t₁ among the SRS resources to BS A, are allocated to UE 2, and sub-bands c₅ and c₆ are allocated to UE 3, 2) sub-bands c₁ and c₂ of detailed time band t₂ are allocated to UE 1, 3) sub-bands c₅ and c₆ of detailed time band t₃ are allocated to UE 2, and 4) sub-bands c₁ and c₂ of detailed time band t₄ are allocated to UE 1 and sub-bands c₃ and c₄ of detailed time band t₄ are allocated to UE 1.

Through the aforementioned allocation, the corresponding BS A may receive the SRS from the all UEs in all bands such that the SRS resources are not overlapped in all UEs within the finite time interval T.

However, in the fourth embodiment of FIG. 5, the SRS resources are semi-randomly allocated such that the SRS resources are not overlapped in each cell, and when the resources of each cell are reallocated for each UE, the BS receives the SRS in all bands considering the entire finite time interval T in an aspect of each UE. However, a period of reception of the SRS becomes long, so that it is difficult to accurately estimate the downlink channel for each UE.

Accordingly, as described above, in order to estimate the downlink channel by using the SRS, it is necessary to rapidly track the change of the time of the downlink channel, and thus it is necessary to more frequently transmit the SRS by each UE.

In this respect, the fifth embodiment is suggested for the frequent estimation of downlink channel information, and the number of times of transmission of the SRS by each UE is increased in the fifth embodiment.

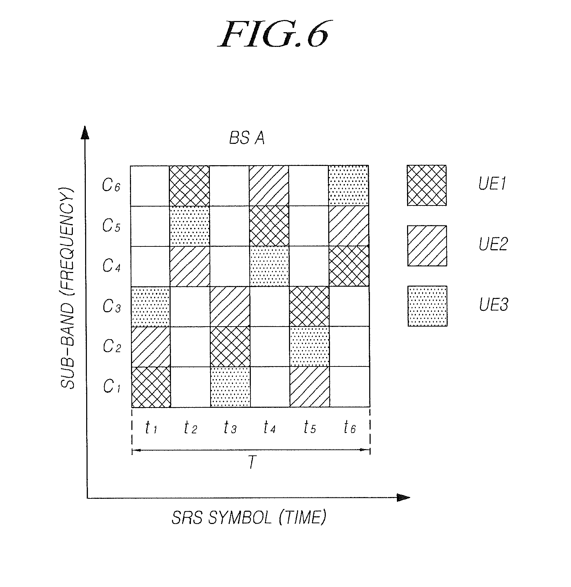

That is, as illustrated in FIG. 6, according to the fifth embodiment of the present invention, multiple UEs allocate the SRS resources such that each of the UEs belonging to each cell uses different SRS resources when the multiple UEs transmit the SRS to multiple BSs, in the SRS resources are reallocated to each UE such that each UE more frequently transmits the SRS than in a case of FIG. 5.

In the fourth embodiment of FIG. 5, the detailed time bands in which the SRS is transmitted based on each UE is spaced in an interval of one detailed time band. That is, the detailed time band in which the SRS is transmitted based on UE 1 is t₂, t₄, and t₆ which are spaced in an interval of one detailed time band.

In the meantime, according to the fifth embodiment illustrated in FIG. 6, the SRS resources are reallocated such that UE 1 through UE 3 transmit the SRS in every detailed time band or every time slot.

More specifically, in FIG. 6, the SRS transmission regions are reallocated to regions, ((t₁, c₁), (t₂, c₆), (t₃, c₂), (t₄, c₅), (t₅, c₃), and (t₆, c₄)), which are combinations of the time slots and the sub-bands, for UE 1.

That is, in the reallocation of the SRS resources allocated to each BS to the multiple UEs, the SRS resources are reallocated such that each UE transmits the SRS in at least one sub-band in the entire time slots or the detailed time bands (T).

Through the aforementioned reallocation of the SRS resources, the SRS is transmitted in all bands within the entire finite time intervals T, the SRS resources are not overlapped with another UE, and the SRS is more frequently transmitted compared to the fourth embodiment of FIG. 5, so that it is possible to accurately and rapidly estimate the downlink channel.

The summary of the aforementioned first to fifth embodiments is as follows.

The resources which each cell use for the SRS transmission are first allocated, and then when the resources which the UE belonging to each cell will use for the SRS transmission are reallocated, the SRS resource allocation technique, such as a hierarchical resource allocation technique or a timing-frequency hopping technique is used. To specifically describe the implementation technique, the resources which each cell will use are allocated through the technique of allocating the resources in different time domains or the technique of semi-randomly allocating the resources according to a regular rule, and then the resources to be used by each cell are reallocated. In this case, the reallocation of the resources may employ a sequential allocation technique or a semi-random allocation technique.

Especially, as described in the third and fifth embodiments, it is preferable that the SRS resource allocation for each BS and the reallocation for each UE within the cell are made to the time domain in which the downlink channel may be estimated in a unit of the BS and the UE.

In the meantime, an SRS transmission period or an SRS transmission method should be considered in addition to the aforementioned SRS resource allocation (design). Hereinafter, a factor to be considered in selection of the SRS transmission period or the SRS transmission method will be described.

Generally, the UE estimates a speed of the change of the downlink channel and reports the estimated speed of the change to the BS.

However, the present invention omits the aforementioned estimation and report of the speed of the change of the downlink channel, but adopts the construction of estimating the speed of the change of the downlink channel from the received SRS and determining the SRS transmission period by the BS. Such an adopted construction is enough to measure the change of the downlink channel.

The SRS transmission period should be decided such that each BS may estimate the downlink channel by using the SRS received from one or more UEs. The SRS is basically a signal used for estimation of the information on the uplink channel, so that a frequency of the SRS transmission is decided by a speed of a change of the uplink channel. The uplink and the downlink generally have different channel properties, but the speeds of the change of the two channels are decided by a speed of movement of the UE, so that it is highly probable that the speeds of the change of the two channels are the same. Accordingly, a frequency by which the information on the uplink channel should be transferred to the BS and a frequency by which the downlink channel information should be transferred to the BS are the same.

Accordingly, the conventional technique in which the UE estimates the speed of the change of the channel and reports (feeds back) the estimated speed of the change of the channel to the BS is omitted, and the present invention adopts the construction of transmitting the SRS whenever the information on the uplink channel is necessary without a separate transmission control, through which therefore it is possible to acquire the downlink channel information with sufficient frequencies.

However, when the BS estimates the speed of the change of the channel from the received SRS and determines the SRS transmission period, not only the speed of the change of the uplink channel, but also the speed of the change of the downlink channel, should be considered, because the present invention has the structure in which the BS acquires the downlink channel information, as well as the information on the uplink channel, through the SRS.

In the foregoing description, it has been described the technique of allocating and reallocating the SRS transmission regions, in which the SRS transmission regions are divided into the time domains (symbol or sub-frame) and the frequency domains (sub-bands) and the downlink channel can be estimated without an overlap of the SRS transmission regions for each BS and/or each UE. However, the present invention is not limited thereto and may be implemented with another technique.

However, according to the technical spirit of the present invention, the present invention is not limited to the technique of allocating and reallocating the SRS transmission regions, in which the SRS transmission regions are divided into the time domains (symbol or sub-frame) and the frequency domains (sub-bands) and the downlink channel can be estimated without an overlap of the SRS transmission regions for each BS and/or each UE, and all BSs or UEs use all SRS transmission regions, in which it is possible to discriminate the SRSs of the BS and the UE by using various codes.

That is, in the method of transmitting the SRS transmitted by the UE to two or more BSs, the present invention may adopt the construction in which the UE generates the SRS such that the SRS is not overlapped in each BS, allocates the SRS to the time-frequency domain and transmit the SRS, wherein the SRS is allocated to the time domain in which the downlink channel may be estimated from the SRS for each BS.

For example, the bands to be used by each cell may be determined in a sequence, such as the Zadoff sequence, such that all cells use all bands and receive the SRSs in different sub-frames.

That is, a hierarchical structure in which 1) each cell may receive the allocation of all bands within the finite time interval T, and 2) the allocation of the band between the cells is performed and the bands for the SRS transmission between the UEs within each cell are used. 1) may be implemented through allocating the band for the SRS to each cell in a technique identical to the technique of allocating the bands for the SRS to each UE. Then, in the allocation of the bands for the SRS between the UEs within each cell, 2-1) all UEs may have the same hopping technique and different initial offsets so that each UE may transmit the SRS through all bands within the finite time interval T or 2-2) the technique identical to the technique of allocating the SRS to each UE in an existing system may be used.

### Cross-reference to related application

This application claims priority under 35 U.S.C. §119(a) to a Korean Patent Application entitled filed in the Korean Industrial Property Office on August 19, 2009 and assigned Serial No. 10-2009-0076937, the contents of which are incorporated herein by reference. Further, when this application claims the priority in other countries, other than the USA with the same reason, the contents of which are incorporated herein by reference.

## Claims

1. A method of transmitting an uplink broadband measurement signal to two or more base stations by user equipment, the method comprising:
a first stage of generating the uplink broadband measurement signal;
a second stage of allocating resources to transmit the uplink broadband measurement signal to a time-frequency domain such that the resources are not overlapped for each base station; and
a third stage of transmitting the allocated uplink broadband measurement signal.

2. The method as claimed in claim 1, wherein in the second stage of allocating the resources to transmit the uplink broadband measurement signal to the time-frequency domain such that the resources are not overlapped for each base station, the resources are allocated to a time domain in which a downlink channel can be estimated from the uplink broadband measurement signal for each base station.

3. The method as claimed in claim 2, wherein when a number of the user equipments is two or more, each of the two or more base stations reallocates uplink broadband measurement signal allocation regions allocated to each base station to the time domain, in which the downlink channel between each user equipment and the base station can be estimated, such that the uplink broadband measurement signal allocation regions are not overlapped for each of the two or more user equipments and the uplink broadband measurement signal can be transmitted in all bands.

4. An apparatus for transmitting an uplink broadband measurement signal to two or more base stations, the apparatus generating the uplink broadband measurement signal, allocating resources to transmit the generated uplink broadband measurement signal to a time-frequency domain such that the resources are not overlapped for each base station, and transmitting the uplink broadband measurement signal to a corresponding base station.

5. The apparatus as claimed in claim 4, wherein when the resources to transmit the uplink broadband measurement signal are allocated to the time-frequency domain such that the resources are not overlapped for each base station, the resources are allocated to a time domain in which a downlink channel can be estimated from the uplink broadband measurement signal for each base station.

6. The apparatus as claimed in claim 5, wherein allocating of the resources to transmit the uplink broadband measurement signal to the time-frequency domain such that the resources are not overlapped in the time-frequency domain for each base station employs a semi-random allocation technique in which uplink broadband measurement signal resources are allocated according to a regular rule such that the resources are not overlapped for each base station and each base station can receive the uplink broadband measurement signal in all bands for a finite time interval T.

7. A method of estimating a downlink channel in two or more base stations, the method comprising:
by each of the two or more base stations,
receiving an uplink broadband measurement signal generated in user equipment, allocated to a time-frequency domain in which a downlink channel can be estimated without an overlap of the uplink broadband measurement signal for another base station, and transmitted; and
estimating the downlink channel from the received uplink broadband measurement signal.

8. The method as claimed in claim 7, wherein the base station estimates a speed of a change of a channel from the received uplink broadband measurement signal and determines an uplink broadband measurement signal transmission period.

9. A base station apparatus for estimating a downlink channel by using an uplink broadband measurement signal received from user equipment, the base station apparatus receiving the uplink broadband measurement signal generated in the user equipment, allocated to a time-frequency domain in which a downlink channel can be estimated without an overlap of the uplink broadband measurement signal for another base station, and transmitted, and estimating the downlink channel from the received uplink broadband measurement signal.

10. The base station apparatus as claimed in claim 9, wherein the base station apparatus estimates a speed of a change of a channel from the received uplink broadband measurement signal and determines an uplink broadband measurement signal transmission period.
